# EUROPÄISCHE PATENTSCHRIFT

(11) **EP 0 824 998 B1**
(45) Veröffentlichungstag und Bekanntmachung des Hinweises auf die Patenterteilung: **02.04.2003**
(21) Anmeldenummer: 97114263.3
(22) Anmeldetag: 19.08.1997
(51) Int. Cl.: B25H 1/00, B27C 5/10

(54) **Vorrichtung zum Handhaben einer Werkzeugmaschine**
Device for handling a machine tool
Outil pour la manutention d'une machine-outil

(30) Priorität: 23.08.1996 DE 19634156
(43) Veröffentlichungstag der Anmeldung: 25.02.1998
(73) Patentinhaber: Dufter, Peter Martin, 83313 Siegsdorf (DE)
(72) Erfinder: Dufter, Peter Martin, 83313 Siegsdorf (DE)
(74) Vertreter: Sandmann, Joachim, Dr.

(56) Entgegenhaltungen:
- EP-A- 0 445 363
- EP-A- 0 715 931
- DE-U- 29 507 975
- FR-A- 2 665 859
- US-A- 4 392 307
- US-A- 4 742 853

## Beschreibung

Die Erfindung bezieht sich auf eine Vorrichtung zum Handhaben einer Werkzeugmaschine, insbesondere eines Handbohrgeräts oder Fräsgeräts, mit einer Werkstückauflage, die zwei parallele Auflagestäbe aufweist, mit zwei jeweils einer Seitenflanke des Werkstücks zugeordneten Spannstücken verbunden ist und zwei aufragende Führungssäulen trägt, auf denen ein Querstück mit Säulenaufnahmebohrungen sowie mit einer Aufnahme und einer Arretierung für die Werkzeugmaschine verschiebbar geführt ist.

Eine derartige Vorrichtung ist als Bohrständer für eine Handbohrmaschine bekannt (DE-U-295 07 975). Dabei ist die Werkstückauflage als quadratischer Rahmen aus vier fest miteinander verbundenen Stäben in einer gemeinsamen Ebene ausgebildet. Unterhalb jeder Rahmenecke ist ein Spannstückträger vorgesehen, der in einer Gewindebohrung eine handverstellbare Spannspindel mit einem tellerförmigen Spannklotz zur Werkstückanlage aufweist. Die vier Spannspindeln sind parallel und paarweise gleichachsig ausgerichtet, so daß nach dem flachen Auflegen der Werkstückauflage auf die oberseitige Fläche des Werkstücks dieses zwischen den an seinen Seitenflanken angreifenden Spannklötzen einspannbar ist. Die Führungssäulen lassen sich gemeinsam um an ihren unteren Enden vorgesehene Schwenklager quer zu ihrer Verbindungsebene verschwenken, um den Neigungswinkel des Werkzeugs gegenüber dem Werkstück einzustellen. Ein einstellbarer Tiefenanschlag sichert die Einhaltung der vorgesehenen Bohrtiefe.

Die bekannte Vorrichtung ermöglicht zwar eine Ausrichtung zwischen Werkzeug und Werkstück, jedoch gibt es erhebliche Einschränkungen hinsichtlich der Einsatzmöglichkeiten, und auch die Handhabung ist vergleichsweise schwierig. Durch die Größe der Auflagefläche und die Größe ihrer zentralen Ausnehmung ist die bekannte Vorrichtung auf Werkstücke innerhalb eines bestimmten Größenbereichs festgelegt, und durch den Abstand der beiden Spannstückpaare ist die maximale Breite der bearbeitbaren Werkstücke festgelegt. Beim Einsatz für dem gegenüber schmale Werkstücke ist dieselbe Vorrichtung dann überdimensioniert, schwer und unhandlich, wobei entsprechend lange Gewindespindeln für die Spannklötze vorzusehen sind und der Spannvorgang entsprechend zeitaufwendig ist. Dazu trägt auch bei, daß das Werkzeug nicht selbsttätig auf die Mitte zwischen den Seitenflanken des Werkstücks zentriert wird. Insbesondere ist es bei der bekannten Vorrichtung auch nachteilig, daß die Werkstückauflage das Werkstück abdeckt und verschiedene Bearbeitungsvorgänge mit außermittig am Werkstück ansetzendem Werkzeug garnicht zuläßt.

Dementsprechend liegt der Erfindung die Aufgabe zugrunde, eine Handhabungsvorrichtung zu schaffen, die diesen Nachteilen begegnet, also vielfältiger einsetzbar ist, sich unterschiedlichen Werkstücken besser anpassen läßt und einfacher zu handhaben ist.

Diese Aufgabe wird - ausgehend von der eingangs beschriebenen Vorrichtung - erfindungsgemäß dadurch gelöst, daß als Spannstücke zwei parallele Anlagestäbe vorgesehen sind, daß die vier Stäbe parallelogrammartig mittels Achsbolzen aneinander angelenkt sind, so daß bei auf dem Werkstück aufliegenden Auflagestäben die Anlagestäbe sich an die Seitenflanken unterschiedlich breiter Werkstücke andrücken lassen, daß wenigstens einem der vier Achsbolzen eine lösbare Klemmvorrichtung zum Fixieren des Winkels zwischen den aneinander angelenkten Stäben zugeordnet ist und daß die Führungssäulen von einem parallelen Stabpaar aufragen und drehbar in diesem oder im Querstück gelagert sind, das mit dem anderen Stabpaar parallelverschwenkbar ist.

Diese erfindungsgemäße Vorrichtung wird bei gelöster Klemmvorrichtung mit den beiden Auflagestäben auf das Werkstück aufgesetzt, worauf die beiden Anlagestäbe unter Veränderung der Parallelogrammform aufeinanderzu in Anlage an die Seitenflanken des Werkstücks bewegt werden, worauf die Klemmvorrichtung angezogen wird. Die Drehbarkeit im Bereich der Führungssäulen gewährleistet das Schließen der von den Stäben umgrenzten Parallelogrammöffnung in Anpassung an die Werkstückbreite, wozu es keiner Spindelbetätigung bedarf. Da das Querstück mit dem Werkzeug sich wie die beiden querstückparallelen Stäbe verschwenkt, bleibt die mittige Ausgangslage des Werkzeugs zwischen den Anlagestäben erhalten, so daß das Werkzeug selbsttätig auf die Werkstückmitte zwischen den Seitenflanken des Werkstücks zentriert wird. Dieser Effekt kann zur Arbeitsvereinfachung beitragen.

Ferner ist die erfindungsgemäße Vorrichtung gut für Bearbeitungsvorgänge geeignet, bei denen ein festes Verspannen der Vorrichtung mit dem Werkstück entfallen kann und das bloße Anlegen an zwei sich gegenüberliegenden Flanken oder Führungsflächen eines beispielsweise leistenförmigen Werkstücks oder auch an nur einer Führungsfläche eines großen Werkstücks zur Ausrichtung ausreicht, wobei die Vorrichtung dann von Hand längs des Werkstücks bewegt wird, beispielsweise um eine Fräsnut auszubilden. In diesem Fall können nach dem Anlegen der Anlagestäbe und nach dem Fixieren der Parallelogrammform die Anlagestäbe als Führungsstäbe längs der Seitenflanken des Werkstücks vorgeschoben werden, ohne daß ein Lösen oder neues Einstellen der Stäbe erforderlich wird. Das gilt beispielsweise auch für das Anbringen einer Reihe von mittigen Bohrungen bei einem leistenförmigen Werkstück, und beispielsweise kann es auch ausreichen, bei fixierter Parallelogrammform nur einen der beiden Anlagestäbe an eine Seitenflanke des Werkstücks anzulegen und längs dieser vorzubewegen. Ebenso ist es natürlich möglich, bei entsprechend geformten Werkstücken die beiden Anlagestäbe nicht an nach außen weisende Seitenflanken sondern an zwei sich zugewandte Seitenflanken des Werkstücks anzudrücken, die eine Werkstückvertiefung begrenzen, also beim Andrücken die Parallelogrammöffnung nicht zu verengen sondern aufzuweiten.

Die erfindungsgemäße Vorrichtung läßt sich in vielfacher Weise ausgestalten und weiterbilden, wie es sich im einzelnen aus den abhängigen Ansprüchen 2-22 sowie aus der nachfolgenden Beschreibung von Ausführungsbeispielen ergibt. Besonders vorteilhaft ist dabei der Einsatz von Lochstäben sowohl für die Auflagestäbe wie für die Anlagestäbe und die Verwendung von umsteckbaren und mittels Arretierschrauben gesicherten Achsbolzen. Dadurch läßt sich die Vorrichtung zusätzlich an die Größe des zu bearbeitenden Werkstücks anpassen, wobei eine für den Bearbeitungsvorgang erforderliche Mindestgröße der von den Stäben umschlossenen Parallelogrammform gewährleistet bleibt, und ebenfalls lassen sich Umrüstungen in Anpassung an spezielle Werkstückformen und Bearbeitungsschritte vornehmen.

Bei einer zweckmäßigen Ausführungsform läßt sich ein Auflagestab auf seinen zwei Achsbolzen axial gegenüber den beiden Anlagestäben distanzieren, um eine für die Bearbeitung gewünschte Neigungen zwischen dem Werkstück und dem Werkzeug zu erzielen, ohne daß es dazu der Schwenkung bzw. Anlenkung der Fühungssäulen an einem Stabpaar bedarf.

Sehr zweckmäßig sind auch die den Anlagestäben zugeordneten Spannplatten, die einerseits über das vorbeschriebene Anlegen der Anlagestäbe hinaus ein festes Einspannen des Werkstücks ermöglichen - wichtig im Falle der vorgenannten Neigung des Werkstücks unter Kantenanlage an den beiden Auflagestäben - und andererseits auch dazu beitragen können, daß sich eine entsprechend dem Ausfahrweg der Spannplatten weniger weit geschlossene Parallelogrammöffnung ergibt, als es ansonsten aufgrund der Werkstückform und -größe der Fall wäre. Auch läßt sich mittels dieser Spannplatten auf einfache Weise eine außermittige Ausrichtung des Werkzeugs gegenüber dem Werkstück erzielen.

Ausführungsbeispiele und Anwendungsmöglichkeiten der erfindungsgemäßen Vorrichtung werden nachfolgend anhand einer schematischen Zeichnung näher erläutert. Es zeigen:
- Figur 1: eine perspektivische Darstellung der Vorrichtung samt Werkzeug;
- Figur 2: eine Draufsicht auf die Vorrichtung gemäß Figur 1;
- Figur 3: einen Schnitt längs Linie III-III in Figur 2 unter Andeutung mehrerer verdeckter Arretierschrauben;
- Figur 4: eine Figur 1 entsprechende Darstellung der Vorrichtung in neigungsfreier Einstellung unter Andeutung eines eingespannten Werkstücks;
- Figur 5: eine anbaubare zusätzliche Klemmvorrichtung;
- Figur 6: in gleichfalls perspektivischer Darstellung eine abweichend gestaltete Vorrichtung mit einem angedeuteten großflächigen Werkstück und einem lose angelegten anbaubaren Führungswinkel;
- Figur 7: einen Zirkeleinsatz zur Verwendung bei der erfindungsgemäßen Vorrichtung.

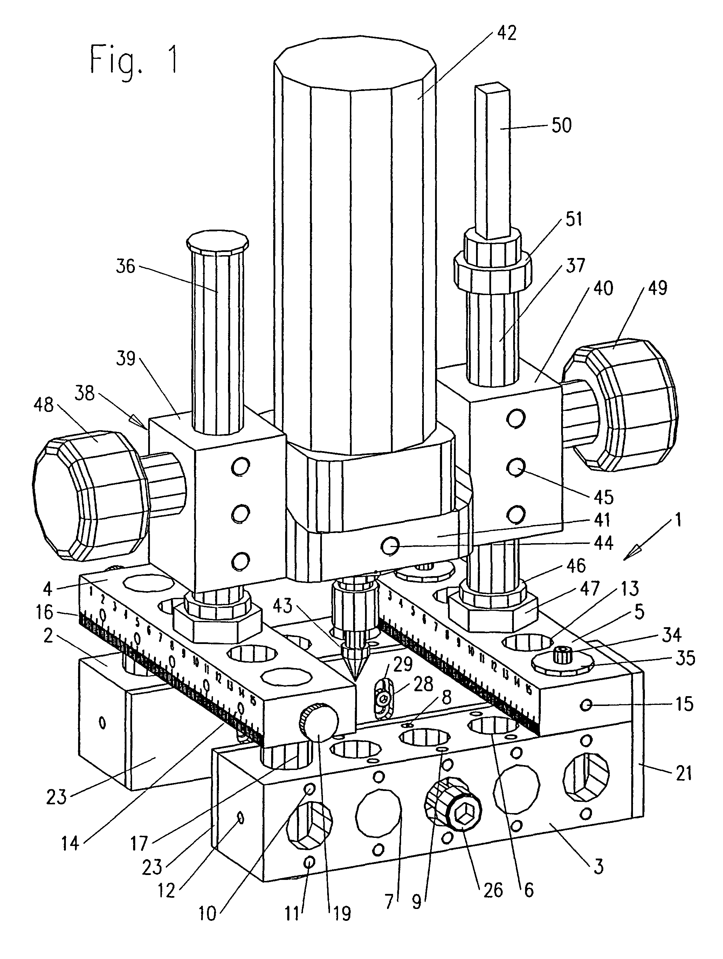

Wie insbesondere aus Figur 1 zu ersehen weist die Vorrichtung 1 zwei zueinander parallele Anlagestäbe 2 und 3 sowie zwei zueinander parallele Auflagestäbe 4 und 5 auf. Die Anlagestäbe 2 und 3 sind als Lochstäbe von quadratischem Profil ausgebildet, die eine Reihe von Vertikalbohrungen 6 sowie eine Reihe von Horizontalbohrungen 7 aufweisen, die jeweils vollständig durch den Stab hindurch gehen. Die Vertikalbohrungen 6 sind von zwei Reihen vertikaler Gewindebohrungen 8 und 9 flankiert, die von der Oberseite der Stäbe 2, 3 ausgehen und in die Horizontalbohrungen 7 einmünden. Auch die Horizontalbohrungen 7 sind von zwei Reihen von horizontalen Gewindebohrungen 10 und 11 flankiert, die jeweils von den einander abgewandten Außenseiten der Anlagestäbe 2 und 3 ausgehen und in die Vertikalbohrungen 6 einmünden. Ferner sind in den Stirnseiten der Auflagestäbe 2 und 3 mittige axiale Gewindebohrungen 12 vorgesehen. Nicht dargestellt ist eine mögliche Alternative, bei der die Anlagestäbe 2, 3 jeweils anstelle der kleinen Gewindebohrungen 12 mit einer durchgehenden zentralen Längsbohrung entsprechend den Bohrungen 6 und 7 versehen sind.

Wie dargestellt sind die Anlagestäbe 2, 3 in solcher Länge vorgesehen, daß jeweils Reihen mit fünf Bohrungen 6, 7 und 10, 11 sowie drei Bohrungen 8, 9 vorhanden sind, die jeweils innerhalb der Reihe mit gleichen Abständen zueinander in gemeinsamen Profilebenen der Stäbe 2, 3 angeordnet sind. Dabei sind die Abmessungen so gewählt, daß die Vertikalbohrungen 6 und die Horizontalbohrungen 7 gleiche Durchmesser D aufweisen, die Höhe und Breite der Stäbe 2, 3 2D betragen und die Abstände zwischen benachbarten Bohrungen 6 bzw. 7 sowie der Abstand der Stirnseiten der Stäbe zu den benachbarten Bohrungen 6 bzw. 7 jeweils 1/2 D betragen. Diese Abmessungen haben sich bewährt.

Auch die Auflagestäbe 4 und 5 sind jeweils mit einer Reihe von durchgehenden Vertikalbohrungen 13 versehen, in denen von den Außenseiten der Auflagestäbe 4, 5 ausgehende horizontale Gewindebohrungen 14 einmünden. Auch hier sind in den Stirnseiten der Stäbe 4 und 5 mittige axiale Gewindebohrungen 15 vorgesehen, die in die benachbarte Vertikalbohrung 13 einmünden. Des weiteren sind gemäß Figur 1 die Auflagestäbe 4 und 5 außenseitig und innenseitig mit einer Längenskala (Breitenskala) 16 versehen. Die Abmessungen der Auflagestäbe 4, 5 entsprechen hinsichtlich der Länge und der Breite denjenigen der Anlagestäbe 2, 3, die Höhe ist jedoch nur halb so groß, beträgt also 1D. Dafür fehlen den fünf Vertikalbohrungen 13 zugeordnete Horizontalbohrungen, und ebenso ist nur jeweils eine Reihe von horizontalen Gewindebohrungen 14 vorgesehen.

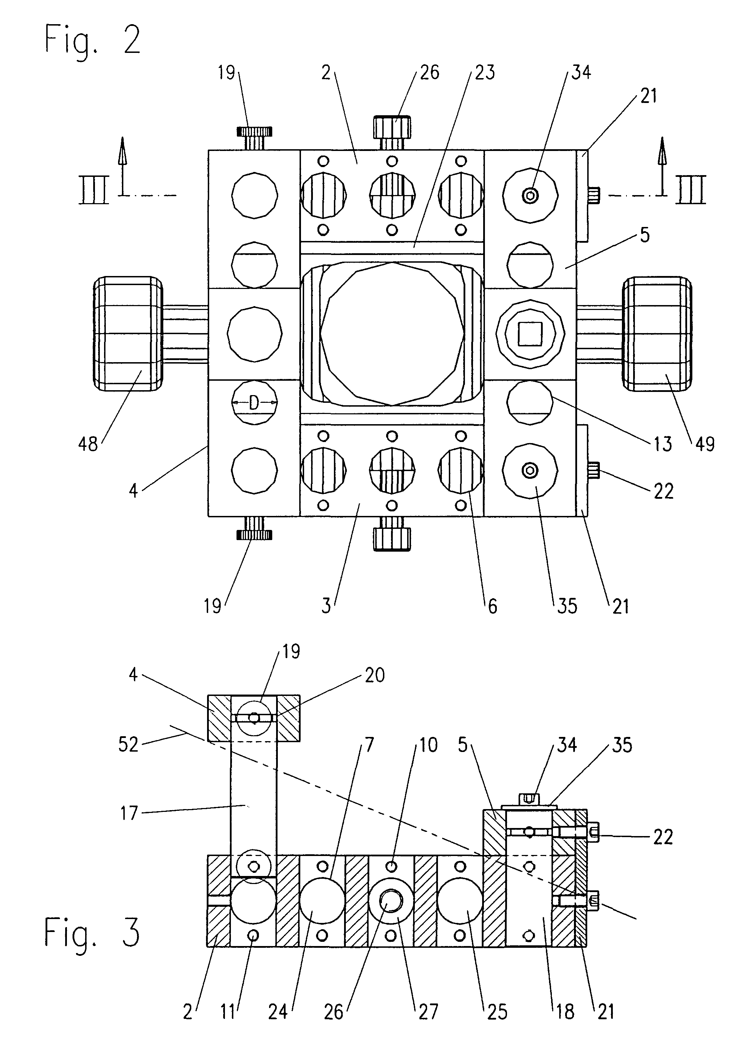

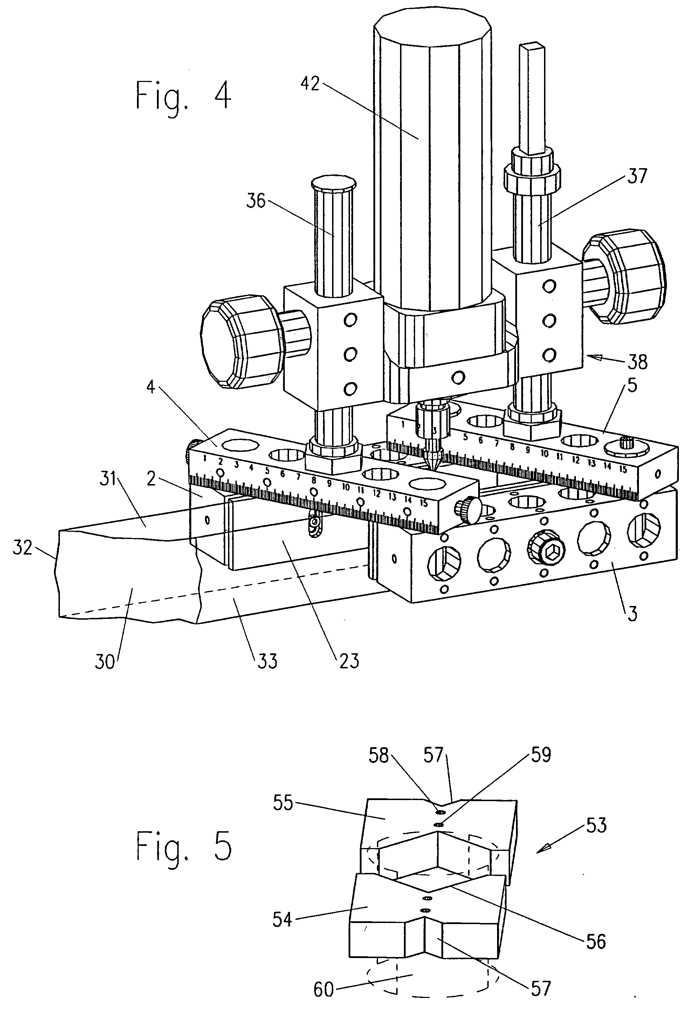

Die Auflagestäbe 4 und 5 sind mit den Anlagestäben 2, 3 zu einem rechteckigen bzw. quadratischen Rahmen (Fig. 1, 2) oder zu einem parallelogrammartigen Rahmen (Figur 4) miteinander verbunden. Dazu sind vier Achsbolzen vorgesehen, die entsprechend der Darstellung jeweils in den äußeren Vertikalbohrungen 6 und 13 der Stäbe 2 bis 5 angeordnet sind. Die beiden linken Achsbolzen 17 sind in Figur 1 teilweise zu sehen, weil der Auflagestab 4 von den Anlagestäben 2 und 3 etwas abgehoben ist, während von den rechten Achsbolzen 18 einer in Figur 3 zu sehen ist.

Die mit Lagerspiel in den Vertikalbohrungen 6, 13 der Stäbe 2 bis 5 gelagerten Achsbolzen 17, 18 sind jeweils mittels zwei Arretierschrauben 19, bei denen es sich auch um Madenschrauben handeln kann, an den beiden gelenkig verbundenen Stäben festgelegt. Sämtliche Arretierschrauben 19 weisen einen gerändelten Kopf auf und sind in gleicher Weise ausgebildet, was auch für die Gewindebohrungen 8 bis 12 sowie 14 und 15 gilt, in welche die Arretierschrauben 19 eingeschraubt werden können. Zur Entlastung der Zeichnung sind in den Figuren nicht alle sondern nur eine bzw. wenige Arretierschrauben 19 dargestellt.

Aus Figur 3 ist zu ersehen, wie die Achsbolzen 17, 18 mit den Stäben 2 bis 5 verbunden sind. Danach weist jeder Achsbolzen 17, 18 in seinem oberen Bereich eine Ringnut 20 auf, in die das vordere (innere) gewindefreie Ende einer in die axiale Gewindebohrung 15 des Auflagestabs 4, 5 eingeschraubten oberen Arretierschraube 19 mit Bewegungsspiel eingreift. Dadurch sind die Achsbolzen 17, 18 axial in den Vertikalbohrungen 13 der Auflagestäbe 4, 5 festgelegt, wobei jedoch eine Relativdrehung des Auflagestabes 4, 5 gegenüber dem Achsbolzen 17, 18 erfolgen kann. Demgegenüber sind die Anlagestäbe 2, 3 mittels der unteren Arretierschrauben 19 drehfest und axial unverschieblich mit den Achsbolzen 17, 18 verspannt. Gegebenenfalls können dabei die inneren Enden der unteren Arretierschrauben 19 in nicht gezeichnete Radialbohrungen der Achsbolzen 17, 18 eingreifen, insbesondere im Fall der Figur 4, wo beide Auflagestäbe 4, 5 auf den Anlagestäben 2, 3 aufliegen. Dabei können die betreffenden Arretierschrauben 19 wahlweise in eine der horizontalen Gewindebohrungen 10 bis 12 eingeschraubt werden. Diese haben eine unterschiedliche Höhenlage, so daß bei abgehobenem Auflagestab 4 gemäß Figur 3 die Gewindebohrung 10 bevorzugt zur Anwendung kommt. Jedoch könnten bei gegenüber den Achsbolzen 18 nach unten verlängerten Achsbolzen 17 auch die Gewindebohrungen 11 oder 12 verwendet werden.

Die gemäß Figuren 1 und 2 quadratische Anordnung der Stäbe 2 bis 5 läßt sich durch eine oder wie dargestellt durch zwei Feststellplatten 21 sichern, die im Bereich einer der Bolzenachsen 18 vorgesehen sind und in fester gleichzeitiger Anlage an den Stäben 2 und 5 bzw. 3 und 5 mittels zweier Feststellschrauben 22 fixiert sind, die in die übereinander angeordnete Gewindebohrungen 12 und 14 eingeschraubt sind. In dieser stabilen Rechteckstellung bzw. Quadratstellung läßt sich die in erster Linie als Handgerät vorgesehene Vorrichtung 1 auf einer Werkbank befestigen und als Standgerät einsetzen, wobei auch eine im Vergleich zu den Figuren kopfstehende Anordnung in Betracht kommt.

Jedem Anlagestab 2, 3 ist eine Spannplatte 23 zugeordnet, wobei die beiden Spannplatten 23 sich im dargestellten Ausführungsbeispiel entlang den einander zugewandten Innenseiten der beiden Anlagestäbe 2, 3 erstrecken. Jede Spannplatte 23 ist an ihrer dem Anlagestab 2, 3 zugewandten Rückseite mit zwei Führungsbolzen 24, 25 (Fig. 3) versehen, die gleitend von zwei Horizontalbohrungen 7 aufgenommen sind. Zweckmäßigerweise sind die Fühungsbolzen 24, 25 lösbar mit der Spannplatte 23 verbunden und wahlweise in Ausrichtung auf andere Horizontalbohrungen 7 der Anlagestäbe 2, 3 mit der Spannplatte 23 verbindbar.

Jeder Spannplatte 23 ist zu ihrer Betätigung eine Spannschraube 26 zugeordnet, die in eine bolzenförmige Innengewindehülse 27 eingeschraubt ist, die in die mittlere Horizontalbohrung 7 des Anlagestabs eingeschoben und in nicht dargestellter Weise mittels einer in die zugehörige Gewindebohrung 8 oder 9 eingeschraubte Arretierschraube 19 festgelegt ist. Die Spannschrauben 26 sind jeweils durch eine Mutter 28 lösbar mit der Spannplatte 23 verbunden, wobei die Verbindung im Bereich eines abgestuften Längsschlitzes 29 der Spannplatte 23 vorgesehen ist, so daß die Spannplatte 23 in entsprechendem Maß gegenüber dem zugehörigen Anlagestab 2, 3 höhenverstellbar ist.

Die Vorrichtung 1 läßt sich bei abgeschraubten Feststellplatten 21 parallelogrammförmig anordnen und mit den Anlagestäben 2, 3 bzw. mit den an diesen vorgesehenen Spannplatten 23 an ein Werkstück 30 anlegen, wie es Figur 4 zeigt, wobei die Spannplatten 23 lose an den Anlagestäben 2, 3 anliegen können (Fig. 1) oder in eine Spannstellung ausgefahren werden können (Fig. 4). Dabei werden zweckmäßigerweise nach dem Aufsetzen der Vorrichtung 1 mit den Auflagestäben 4, 5 auf die Werkstückoberseite 31 die Anlagestäbe 2, 3 mit den Spannplatten 23 unter Veränderung der Parallelogrammform lose an die Seitenflanken 32, 33 des leistenförmigen Werkstücks 30 angelegt, worauf nach dem nachfolgend beschriebenen Fixieren der Parallelogrammform eine oder beide Spannschrauben 26 betätigt werden, wozu nur eine kleine Drehung der Spannschrauben 26 erforderlich ist.

Das Fixieren der Parallelogrammform erfolgt mittels einer Klemmvorrichtung wahlweise an einer oder auch an beiden dem Auflagestab 5 zugeordneten Achsbolzen 18. Jeder Achsbolzen 18 weist am oberen Ende eine zentrale Gewindebohrung auf, in die gemäß Fig. 3 eine Klemmschraube 34 mit einem Innensechskantkopf eingeschraubt wird, der über eine Klemmscheibe 35 den Auflagestab 5 auf den Anlagestab 2 bzw. 3 niederdrückt und dadurch die beiden Stäbe unter Fixierung des von ihnen eingeschlossenen Parallelogrammwinkels miteinander verspannt. Die Verspannung kann auch oder zusätzlich mittels zweier radial am Achsbolzen 18 angreifender Arretierschrauben 19 erfolgen, also durch eine drehfeste Verspannung beider Stäbe mit dem Achsbolzen.

Mit den Auflagestäben 4 und 5 ist jeweils eine aufragende Führungssäule 36 bzw. 37 verbunden. Diese sind jeweils in die mittlere Vertikalbohrung 13 des Stabes eingesetzt und mit einer nicht gezeichneten Arretierschraube gesichert, die in die betreffende Gewindebohrung 14 eingeschraubt ist und mit ihrem inneren Ende in eine Ringnut der Führungssäule eingreift. Auf diese Weise sind die Führungssäulen 36, 37 drehbar in den Auflagestäben 4, 5 gelagert und gegen axiale Relativverschiebungen gegenüber dem Stab gehalten.

Auf den beiden Führungssäulen 36, 37 ist ein Querstück 38 mit Führungsklötzen 39, 40 höhenverschiebbar gelagert. Zwischen den beiden Führungsklötzen weist das Querstück eine Werkzeugaufnahme 41 auf, in die ein Fräsgerät 42 mit einem abwärts weisenden Werkzeug 43 eingebaut ist. Eine Gewindebohrung 44 dient zur Fixierung des Fräsgeräts 42 in der Werkzeugaufnahme 41. Die dazu vorgesehene Fixierschraube ist nicht dargestellt. Auch die Führungsklötze 39, 40 sind mit mehreren Gewindebohrungen 45 versehen, so daß jeder Führungsklotz mittels einer nicht dargestellen Halteschraube in beliebiger Höhenlage an der zugehörigen Führungssäule 36 bzw. 37 festgeklemmt werden kann. Ferner ist jede Führungssäule 36, 37 mit einem Stellring 46 versehen, der auf der Führungssäule verstellt und durch eine Mutter 47 festgezogen werden kann.

Zum Herabdrücken des Querstücks 38 und damit des Werkzeugs 43 in Eingriffstellung mit dem Werkstück sind zwei Betätigungsknöpfe 48, 49 vorgesehen, die koaxial in die Führungsklötze 39, 40 eingeschraubt sind. Die Abwärtsbewegung des Werkzeugs 43-ggf. gegen die Rückstellkraft nicht dargestellter Federn - läßt sich durch einen Tiefenanschlag 50 begrenzen, der von einer zentralen Bohrung in der Führungssäule 37 aufgenommen ist, einen nicht dargestellten Längenmaßstab aufweist und mittels einer Feststelleinrichtung 51 einstellbar ist.

Während gemäß Figur 4 die Auflagestäbe 4 und 5 auf den Anlagestäben 2 und 3 aufliegen, das Werkzeug 43 also senkrecht auf die an der Unterseite der Auflagestäbe 4 und 5 anliegende Oberseite 31 des Werkstücks 30 ausgerichtet ist, ist nach Figuren 1 und 3 eine demgegenüber geneigte Anordnung zwischen dem Werkzeug und dem Werkstück vorgesehen. Dazu ist nur die Führungssäule 36 in ihrem Führungsklotz 39 zusammen mit dem mit ihr verbundenen Auflagestab 4 bis in eine gewünschte Höhenlage hochgezogen und dann fixiert worden. Das Ausmaß dieser Relativverschiebung der Führungssäule 36 gegenüber dem Führungsklotz 39 läßt sich anhand einer an der Führungssäule 36 angebrachten Skala einstellen bzw. ablesen. Diese Höhenverschiebung führt zu einer Neigung der Auflageebene 52 gegenüber dem Werkzeug 43, wie es in Figur 3 dargestellt ist. Dementsprechend kann die Skala an der Führungssäule 36 direkt Winkelgrade angeben. Wird mit einer entsprechend geneigten Auflageebene 52 gearbeitet, kommt es anstelle einer flächigen Anlage des Werkstücks an der Unterseite der Auflagestäbe 4 und 5 zu einer Kantenanlage an den Auflagestäben 4 und 5. In diesem Fall ist es vorteilhaft, mit einer festen Einspannung des Werkstücks durch die Spannplatten 23 zu arbeiten, damit das Werkstück vom Kantendruck während des Arbeitsvorgangs entlastet ist.

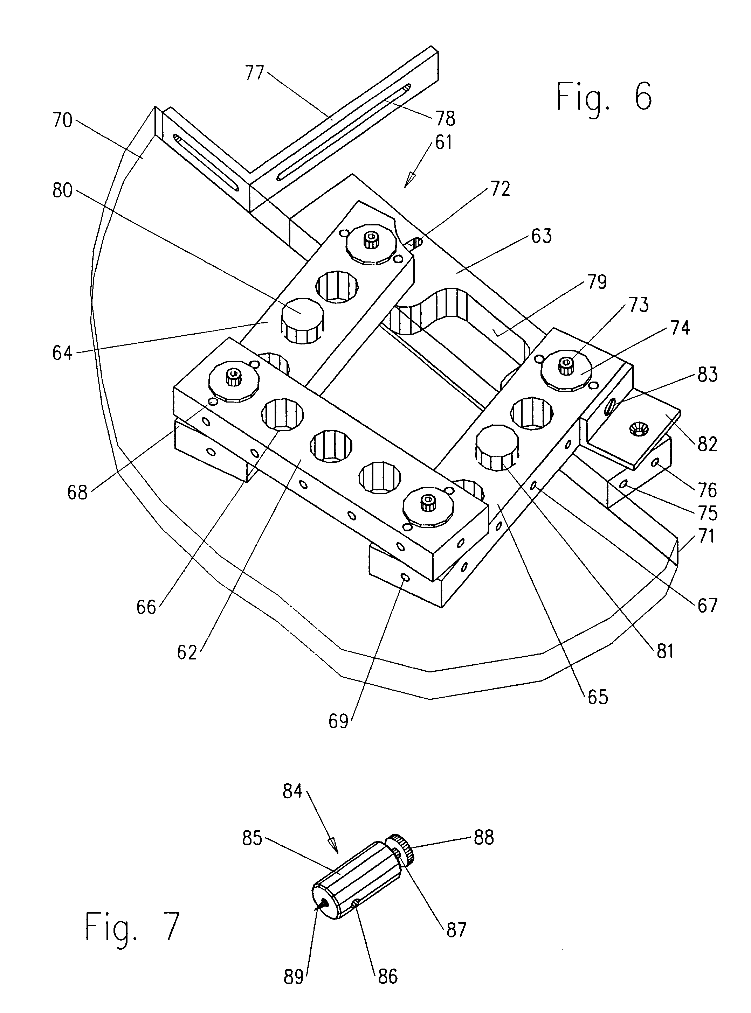

Figur 5 zeigt eine als Zusatz zur vorstehend beschriebenen Vorrichtung 1 vorgesehene Einspannvorrichtung 53, die sich aus zwei einzelnen Klemmplatten 54 und 55 zusammensetzt, die in gleicher Weise ausgebildet sind und in der Betriebsstellung spiegelsymmetrisch angeordnet sind, wie es Figur 5 veranschaulicht.

Jede Klemmplatte 54, 55 weist am einen Ende eine große v-förmige Klemmfläche 56 und am anderen Ende ein kleine v-förmige Klemmfläche 57 auf. Zwischen den mittig gelegenen eingezogenen Klemmflächenspitzen sind in der Mitte der Klemmplatte 54, 55 zwei Befestigungsbohrungen 58, 59 vorgesehen. Mittels nicht dargestellter Befestigungsschrauben, die sich von unten durch eine der Befestigungsbohrungen 58 oder 59 erstrecken und in eine zentrale Gewindebohrung an der Unterseite der Achsbolzen 17, 18 einschraubbar sind, läßt sich die Einspannvorrichtung 53 an zwei sich diametral gegenüberliegenden Achsbolzen 17 und 18 anbringen. Dieses Anbringen erfolgt derart, daß entweder die beiden großen Klemmflächen 56 (wie in Fig. 5 dargestellt) oder die beiden kleinen Klemmflächen 57 einander zugewandt sind. Mit den aufeinander zu weisenden Klemmflächen läßt sich ein Werkstück 60 von beispielsweise gerundeter Profilform ergreifen, indem die beiden mit den Klemmplatten 54 und 55 versehenen Achsbolzen 17, 18 unter Verformung des Stabparallelogramms einander genähert werden. Dabei kann entsprechend der Größe des Werkstücks 60 entweder mit dem großen Klemmflächenpaar 56, 56 oder mit dem kleinen Klemmflächenpaar 57, 57 gearbeitet werden. Die Größe des Werkstücks 60 entscheidet auch darüber, mit welcher der Befestigungsbohrungen 58 oder 59 die Klemmplatten 54, 55 zweckmäßigerweise an die Achsbolzen 17, 18 angeschlossen werden. Es ist nämlich sinnvoll, einen bestimmten Mindestabstand zwischen den beiden Achsbolzen 17, 18 einzuhalten, bei dem die Klemmflächen 56 bzw. 57 am Werkstück 60 angreifen.

Gemäß Figur 6 ist eine von der Vorrichtung 1 gemäß Figuren 1 bis 4 etwas abweichende Vorrichtung 61 dargestellt. Die Vorrichtung 61 weist gleichfalls zwei Anlagestäbe 62 und 63 und zwei Auflagestäbe 64 und 65 auf. Hier besitzen alle Stäbe 62 bis 65 das gleiche flache Rechteckprofil, und dementsprechend sind nur Vertikalbohrungen 66 (keine Horizontalbohrungen) vorgesehen, denen jeweils eine horizontale Gewindebohrung 67 an der Stabaußenseite zugeordnet ist. Den endseitigen Vertikalbohrungen 66 der drei Stäbe 62, 64 und 65 sind jeweils zwei flankierende vertikale Gewindebohrungen 68 sowie eine axiale Gewindebohrung 69 in der benachbarten Stirnseite des Stabes zugeordnet. Auch hier sind die vier Stäbe 62 bis 65 in der zuvor beschriebenen Weise mittels aus der Zeichnung nicht zu ersehender Achsbolzen gelenkig zu einem Rahmen miteinander verbunden, wobei allerdings die beiden Stäbe 62 und 63 nicht in der gleichen Ebene sondern auf entgegengesetzten Seiten der Auflagestäbe 64, 65 angeordnet sind. So können die Auflagestäbe 64 und 65 auf ein großflächiges Werkstück 70 aufgelegt werden, wobei nur noch ein Anlagestab, nämlich der Anlagestab 63, zur Anlage an einer Werkstückkante 71 kommt.

Dieser Anlagestab 63 ist auch abweichend ausgebildet. Er weist keine Reihe von Vertikalbohrungen 66 sondern nur eine Vertikalbohrung zur Verbindung mit dem Auflagestab 65 und im übrigen einen Vertikalschlitz 72 auf, der den Achsbolzen zur Verbindung mit dem Auflagestab 64 aufnimmt. Das eröffnet die Möglichkeit, dem Anlagestab 63 wie dargestellt, eine von der Parallelität zum Anlagestab 62 abweichende winklige Lage zu geben, so daß der von den vier Stäben 62 bis 65 gebildete Rahmen die Form eines ungleichseitigen Vierecks erhält. Die zusätzliche Verschwenkbarkeit des Stabes 63 kann auch dazu beitragen, die Zugänglichkeit des Werkstücks für das Werkzeug weiter zu verbessern.

Diese Stabanordnung läßt sich oberseitig im Bereich der vier Achsbolzen fixieren, in die jeweils eine Klemmschraube 73 mit einer untergelegten Klemmscheibe 74 eingeschraubt ist. Entsprechende Klemmschrauben und Klemmscheiben sind an der Unterseite des Anlagestabs 63 vorgesehen und in eine zentrale Gewindebohrung an der Unterseite der betreffenden zwei Achsbolzen eingeschraubt. Dementsprechend fehlen am Anlagestab 63 horizontale Gewindebohrungen 67. Jedoch sind an den beiden Stirnseiten des Anlagestabs 63 jeweils zwei Gewindebohrungen 75 und 76 vorgesehen. Diese dienen dazu, einen in Figur 6 lose im Abstand angedeuteten Führungswinkel 77 mit Verstellschlitzen 78 in seinen beiden Schenkeln anzuschließen. Die Verstellschlitze 78 und die Ungleichschenkligkeit des Führungswinkels 77 ermöglichen es, den Führungswinkel 77 in einer an das Werkstück 70 angepaßten Lage anzubringen. Wie dargestellt wirkt der Führungswinkel 77 mit der Werkstückkante 71 zusammen, an der auch der Anlagestab 63 anliegt.

Der Anlagestab 63 weist ferner an seiner zur Anlage am Werkstück 70 vorgesehenen Schmalseite eine große Einschnürung 79 auf, in deren Bereich die Werkstückkante 71 freiliegt und somit vom Werkzeug bearbeitet werden kann, das ähnlich wie bei den Figuren 1 bis 4 über zwei von den Auflagestäben 64, 65 aufragenden Führungssäulen 80, 81 getragen ist, die nur mit ihrem unteren Ende dargestellt sind.

Ferner ist in Figur 6 ein Winkelstück 82 mittels einer Senkkopfschraube 83 an den Auflagestab 65 angeschraubt, das mit seinem anderen Schenkel auf dem Anlagestab 63 aufliegt und nach entsprechender Ausrichtung auf eine Gewindebohrung in der Oberseite des Anlagestabs 63 mit diesem verschraubt werden kann, um eine quadratische bzw. rechtwinklige Anordnung der Stäbe 62 bis 65 zu fixieren.

Figur 7 zeigt einen bolzenförmigen Zirkeleinsatz 84, der sich in eine Vertikalbohrung 6, 13 oder 66 einsetzen und sich mittels einer in die zugehörige horizontale Gewindebohrung 10, 14 oder 67 eingeschraubte Arretierschraube fixieren läßt. Dazu weist der Zirkelbolzen 85 eine Radialbohrung 86 auf, in die das innere Ende der Arretierschraube eingreift, so daß der Zirkelbolzen drehfest gelagert ist. Der Zirkelbolzen ist als Hülse mit einem Innengewinde ausgebildet, in das ein Gewindeschaft 87 eingeschraubt ist, der an seinem oberen Ende einen Rändelkopf 88 und an seinem unteren Ende eine Zirkelspitze 89 aufweist. Dementsprechend läßt sich die Zirkelspitze 89 auf einfache Weise bis in Anlage an das Werkstück aus den Zirkelbolzen 85 herausschrauben.

Die vorstehend beschriebenen Vorrichtungen 1 und 61 lassen sich zur Bearbeitung von Werkstücken aus verschiedenartigen Werkstoffen herstellen, insbesondere bei Werkstücken aus Holz und Metall aber auch aus Kunststoff. Die Verwendung von Lochstäben mit Reihen von Vertikalbohrungen und ggf. Horizontalbohrungen sowie mit diesen Bohrungen zugeordneten Reihen von Gewindebohrungen und diesen zugeordneten Arretierschrauben, mit denen sich die Achsbolzen sowie weitere vorstehend beschriebene Teile auf einfache Weise drehbar oder drehfest in ihrer Lage in den Bohrungen sichern lassen, bietet vielflältige Möglichkeiten zur Umrüstung der Vorrichtung in Anpassung an das zu bearbeitende Werkstück und in Anpassung an unterschiedliche Bearbeitungsvorgänge, wozu auch unterschiedliche Werkzeuge eingesetzt werden können. Hierbei lassen sich zwei Arbeitsweisen unterscheiden, nämlich die mit zwischen den Spannplatten 23 fest eingespanntem Werkstück, so beispielsweise zum Anbringen einzelner Bohrungen, und die mit am Werkstück lose aufgelegter und angelegter sowie geführter Vorrichtung, so beispielsweise zum Fräsen von Nuten oder zum schnellen Durchführen von in Führungsrichtung beabstandeten Bearbeitungsmaßnahmen.

Die Vorrichtung selbst kann ebenfalls aus unterschiedlichen Werkstoffen gefertigt sein. Im Hinblick auf die Präzision werden metallische Werkstoffe und im Hinblick auf ein handliches Gewicht Leichtmetall (Aluminium) bevorzugt. Das gilt insbesondere für die vier parallelogrammartig miteinander verbundenen Stäbe.

Zusammenfassend kann festgestellt werden, daß im Vergleich zum Stand der Technik die erfindungsgemäße Vorrichtung in der Lage ist, mit einer einfacheren Technik und weniger Zeitaufwand herkömmliche und sogar bisher nicht durchführbare Arbeitsvorgänge zu erledigen, was zu einer Verringerung des Aufwands führt. Zur Wirtschaftlichkeit tragen auch die vergleichsweise niedrigen Herstellungs- bzw. Anschaffungskosten der Vorrichtung bei.

## Patentansprüche

1. Vorrichtung zum Handhaben einer Werkzeugmaschine (42), insbesondere eines Handbohrgeräts oder Fräsgeräts, mit einer Werkstückauflage, die zwei parallele Auflagestäbe (4, 5) aufweist, mit zwei jeweils einer Seitenflanke (32, 33) des Werkstücks (30) zugeordneten Spannstücken (2, 3) verbunden ist und zwei aufragende Führungssäulen (36, 37) trägt, auf denen ein Querstück (38) mit Säulenaufnahmebohrungen sowie mit einer Aufnahme (41) und einer Arretierung für die Werkzeugmaschine (42) verschiebbar geführt ist, **dadurch gekennzeichnet,**
- **daß** als Spannstücke zwei parallele Anlagestäbe (2, 3) vorgesehen sind,
- **daß** die vier Stäbe (2 bis 5) parallelogrammartig mittels Achsbolzen (17, 18) aneinander angelenkt sind, so daß bei auf dem Werkstück (30) aufliegenden Auflagestäben (4, 5) die Anlagestäbe (2, 3) sich an die Seitenflanken (32, 33) unterschiedlich breiter Werkstücke (30) andrücken lassen,
- **daß** wenigstens einem der vier Achsbolzen (17, 18) eine lösbare Klemmvorrichtung (34, 35) zum Fixieren des Winkels zwischen den aneinander angelenkten Stäben (3, 5) zugeordnet ist und
- **daß** die Führungssäulen (36, 37) von einem parallelen Stabpaar (4, 5) aufragen und drehbar in diesem oder im Querstück (38) gelagert sind, das mit dem anderen Stabpaar (2, 3) parallelverschwenkbar ist.

2. Vorrichtung nach Anspruch 1, **dadurch gekennzeichnet, daß** die Achsbolzen (17, 18) in Vertikalbohrungen (6, 13) der Auflagestäbe (4, 5) und der Anlagestäbe (2, 3) lose eingesetzt und mit diesen durch Arretierschrauben (19) verbunden und in ihrer Axialstellung gesichert sind, die quer zur Bolzenachse in Gewindebohrungen (8 bis 12, 14, 15) der Stäbe (2 bis 5) eingeschraubt sind, wobei die Achsbolzen (17, 18) jeweils gegenüber einem (4, 5) der beiden durch sie verbundenen Stäbe (2 bis 5) dadurch drehbar sind, daß die betreffende Arretierschraube (19) in eine Ringnut (20) des Achsbolzens (17, 18) eingreift.

3. Vorrichtung nach Anspruch 1 oder 2, **dadurch gekennzeichnet, daß** die Führungssäulen (36, 37) in Vertikalbohrungen (13) der Stäbe (4, 5) lose eingesetzt und durch Arretierschrauben (19) gehalten sind, die quer zur Führungssäulenachse in die Stäbe (4, 5) eingeschraubt sind und mit ihrem Ende in Radialbohrungen oder Ringnuten der Führungssäulen (36, 37) eingreifen.

4. Vorrichtung nach Ansprüchen 2 und 3, **dadurch gekennzeichnet, daß** die Stäbe (2 bis 5) als Lochstäbe jeweils mit einer Reihe von gleichbeabstandeten Vertikalbohrungen (6, 13) und einer entsprechenden Reihe von Gewindebohrungen (10, 11, 14) für die Arretierschrauben (19) ausgebildet sind und daß die Achsbolzen (17, 18) und die Führungssäulen (36, 37) gleiche Durchmesser aufweisen und auch die Vertikalbohrungen (6, 13) gleiche Durchmesser (D) haben, so daß die Achsbolzen (17, 18) und auch die Führungssäulen (36, 37) in Anpassung an die jeweiligen Gegebenheiten in andere Vertikalbohrungen (6, 13) der Stäbe (2 bis 5) umsteckbar sind.

5. Vorrichtung nach Anspruch 4, **dadurch gekennzeichnet, daß** jeder Stab (2 bis 5) mindestens fünf Vertikalbohrungen (6, 13) aufweist.

6. Vorrichtung nach Anspruch 4 oder 5, **dadurch gekennzeichnet, daß** der Vertikalbohrungsreihe der Anlagestäbe (2, 3) jeweils zwei zueinander höhenversetzte Reihen von Gewindebohrungen (10, 11) von jeweils gleicher Größe für die Arretierschrauben (19) zugeordnet sind.

7. Vorrichtung nach einem der Ansprüche 1 bis 6, **dadurch gekennzeichnet, daß** die Auflagestäbe (4, 5) doppelt so breit und genau so hoch wie der Durchmesser (D) der Vertikalbohrungen (13) und die Anlagestäbe (2, 3) doppelt so breit und doppelt so hoch wie der Durchmesser (D) der Vertikalbohrungen (6) sind.

8. Vorrichtung nach den Ansprüchen 4 und 7, **dadurch gekennzeichnet, daß** bei jedem Stab (2 bis 5) der Abstand zwischen benachbarten Vertikalbohrungen (6, 13) sowie der Abstand zwischen den endseitigen Vertikalbohrungen und der benachbarten Stirnfläche des Stabs (2 bis 5) dem halben Durchmesser (D) der Vertikalbohrungen (6, 13) entspricht.

9. Vorrichtung nach einem der Ansprüche 1 bis 8, **dadurch gekennzeichnet, daß** jedem Anlagestab (2, 3) eine seitliche Spannplatte (23) zur Anlage am Werkstück (30) zugeordnet ist, die aus, einer flach am Anlagestab (2, 3) anliegenden Ausgangsstellung in eine Abstand zum Anlagestab (2, 3) aufweisende Spannstellung ausfahrbar ist.

10. Vorrichtung nach Anspruch 9, **dadurch gekennzeichnet, daß** jeder Anlagestab (2, 3) mit einer Längsreihe von Horizontalbohrungen (7) versehen ist, denen wenigstens eine Reihe entsprechend ausgerichteter vertikaler Gewindebohrungen (8, 9) für Arretierschrauben (19) zugeordnet ist, daß eine mittlere Horizontalbohrung (7) eine bolzenförmige Innengewindehülse (27) aufnimmt, mit der eine an der Spannplatte (23) angreifende Spannschraube (26) verschraubt ist, und daß die Spannplatte (23) mit zwei Führungsbolzen (24, 25) versehen ist, die in anderen Horizontalbohrungen (7) des Anlagestabs (2, 3) gleiten.

11. Vorrichtung nach den Ansprüchen 4 und 10, **dadurch gekennzeichnet, daß** die Anlagestäbe (2, 3) ebensoviele und ebensogroße Horizontalbohrungen (7) wie Vertikalbohrungen (6) aufweisen, die jeweils paarweise mit sich schneidenden Achsen angeordnet sind.

12. Vorrichtung nach einem der Ansprüche 1 bis 11, **dadurch gekennzeichnet, daß** zur einstellbaren Neigung des Werkstücks (30) gegenüber dem Werkzeug (43) ein Auflagestab (4) von den Anlagestäben (2, 3) parallel verschieblich abhebbar ist, wobei die beiden dem Auflagestab (4) zugeordneten Achsbolzen (17) eine Lageverschiebung gegenüber wenigstens einem (2, 3) der beiden miteinander gelenkig verbundenen Stäbe (2, 4; 3, 4) erfahren und den Abstand zwischen den Stäben (2, 4; 3, 4) überbrücken, der mittels Arretierschrauben (19) gesichert ist, die durch Gewindebohrungen (10 bis 12) der Stäbe (2, 3) bis in Anlage an oder Eingriff in den Achsbolzen (17) einschraubbar sind.

13. Vorrichtung nach einem der Ansprüche 1 bis 12, **dadurch gekennzeichnet, daß** die einem Achsbolzen (18) zugeordnete Klemmvorrichtung (34, 35) von einer Klemmschraube (34) gebildet ist, die in eine axiale Gewindebohrung des Achsbolzens (18) einschraubbar ist und unter Verspannung der beiden Stäbe (2, 5; 3, 5) mit ihrem Kopf oder über eine Unterlegscheibe (35) gegen die Oberseite des oberen Stabes (5) anziehbar ist.

14. Vorrichtung nach einem der Ansprüche 1 bis 13, **dadurch gekennzeichnet, daß** die Stirnseiten der Stäbe (2 bis 5) wenigstens eine bis in die benachbarte Vertikalbohrung (6, 13) durchgeführte, längsgerichtete Gewindebohrung (12, 15) für eine Arretierschraube (19) aufweisen.

15. Vorrichtung nach einem der Ansprüche 1 bis 14, **dadurch gekennzeichnet, daß** wenigstens einem Achsbolzen (17, 18) eine Feststellplatte (21) zugeordnet ist, die bei rechtwinkliger Anordnung der beiden gelenkig verbundenen Stäbe (2 bis 5) an beide Stäbe anlegbar und mit einem Stab oder mit beiden Stäben fest verschraubbar ist.

16. Vorrichtung nach einem der Ansprüche 1 bis 15, **dadurch gekennzeichnet, daß** zwei jeweils v-förmige Klemmflächen (56, 57) aufweisende Klemmplatten (54, 55) vorgesehen sind, die an sich diametral gegenüberliegenden Achsbolzen (17, 18) anbringbar sind und dann in die von den vier Stäben (2 bis 5) umschlossene Parallelogrammöffnung hineinragen, um unter gegenseitiger Annäherung der beiden Achsbolzen (17, 18) ein entsprechendes Werkstück (60) von gegenüberliegenden Seiten her zu ergreifen.

17. Vorrichtung nach Anspruch 16, **dadurch gekennzeichnet, daß** jede Klemmplatte (54, 55) eine Befestigungsbohrung (58, 59) aufweist und mit einer von unten axial in den Achsbolzen (17, 18) einschraubbaren Befestigungsschraube mit dem Achsbolzen (17, 18) verbindbar ist.

18. Vorrichtung nach Anspruch 16 oder 17, **dadurch gekennzeichnet, daß** jede Klemmplatte (54, 55) wenigstens zwei Klemmflächen (56, 57) von unterschiedlicher Form und Größe zum wahlweisen Einsatz aufweist.

19. Vorrichtung nach einem der Ansprüche 1 bis 18, **dadurch gekennzeichnet, daß** ein Zirkelbolzen (85) mit einer axialen Zirkelspitze (89) vorgesehen ist, der in eine der Vertikalbohrungen (6, 13, 66) so einbaubar ist, daß die Zirkelspitze (89) über die Unterseite der Auflagestäbe (4, 5; 64, 65) vorragt.

20. Vorrichtung nach Anspruch 19, **dadurch gekennzeichnet, daß** der Zirkelbolzen (85) als Innengewindehülse ausgebildet ist, in das die von einem Gewindeschaft (87) vorragende Zirkelspitze (89) ausfahrbar eingeschraubt ist.

21. Vorrichtung nach einem der Ansprüche 1 bis 20, **dadurch gekennzeichnet, daß** wenigstens ein Anlagestab (63) vorgesehen ist, der im mittleren Bereich eine Einschnürung (79) aufweist und dadurch eine Bearbeitung des Werkstücks (70) im Bereich der Seitenflanke (71) ermöglicht, an welcher der Anlagestab (63) anliegt.

22. Vorrichtung nach einem der Ansprüche 1 bis 21, **dadurch gekennzeichnet, daß** wenigstens ein Achsbolzen in einem Vertikalschlitz (72) eines Stabes (63) verschiebbar gelagert ist, daß der Vertikalschlitz (72) die Vertikalbohrung am einen Stabende umfaßt und kreisbogenförmig um die Achse der Vertikalbohrung am anderen Stabende verläuft und daß der Winkel zwischen den aneinander angelenkten Stäben (63, 64) mittels einer lösbaren Klemmvorrichtung (73, 74) feststellbar ist.

## Claims

1. Device for manipulating a machine tool (42), in particular a portable drilling implement or routing implement, having a work rest which has two parallel supporting bars (4, 5), is connected to two clamping pieces (2, 3) assigned in each case to a side flank (32, 33) of the workpiece (30) and carries two guide columns (36, 37) projecting upwards, on which a transverse piece (38) with column locating holes and with a receptacle (41) and a locking means for the machine tool (42) is guided in a displaceable manner, **characterized in that**
- the clamping pieces provided are two parallel contact bars (2, 3),
- the four bars (2 to 5) are linked to one another parallelogram-like by means of pivot pins (17, 18), so that, when the supporting bars (4, 5) are resting on the workpiece (30), the contact bars (2, 3) can be pressed against the side flanks (32, 33) of workpieces (30) of different width,
- a releasable clamping device (34, 35) for fixing the angle between the bars (3, 5) linked to one another is assigned to at least one of the four pivot pins (17, 18), and
- the guide columns (36, 37) project upwards from one parallel bar pair (4, 5) and are mounted in a rotatable manner in the latter or in the transverse piece (38), which can be pivoted in parallel with the other bar pair (2, 3).

2. Device according to Claim 1, **characterized in that** the pivot pins (17, 18) are loosely inserted into vertical holes (6, 13) of the supporting bars (4, 5) and of the contact bars (2, 3) and are connected to said bars and secured in their axial position by locking screws (19) which are screwed into tapped holes (8 to 12, 14, 15) of the bars (2 to 5) transversely to the pin axis, the pivot pins (17, 18) in each case being rotatable relative to one (4, 5) of the two bars (2 to 5), connected by them, by the relevant locking screw (19) engaging in an annular groove (20) of the pivot pin (17, 18).

3. Device according to Claim 1 or 2, **characterized in that** the guide columns (36, 37) are loosely inserted into vertical holes (13) of the bars (4, 5) and are held by locking screws (19) which are screwed into the bars (4, 5) transversely to the guide column axis and engage with their end in radial holes or radial grooves of the guide columns (36, 37).

4. Device according to Claims 2 and 3, **characterized in that** the bars (2 to 5) are designed as perforated bars in each case having a row of equispaced vertical holes (6, 13) and a corresponding row of tapped holes (10, 11, 14) for the locking screws (19), and **in that** the pivot pins (17, 18) and the guide columns (36, 37) have identical diameters and the vertical holes (6, 13) also have identical diameters (D), so that the pivot pins (17, 18) and also the guide columns (36, 37), in adaptation to the respective conditions, can be reinserted into other vertical holes (6, 13) of the bars (2 to 5).

5. Device according to Claim 4, **characterized in that** each bar (2 to 5) has at least five vertical holes (6, 13).

6. Device according to Claim 4 or 5, **characterized in that** in each case two rows, vertically offset from one another, of tapped holes (10, 11) of in each case the same size for the locking screws (19) are assigned to the row of vertical holes of the contact bars (2, 3).

7. Device according to one of Claims 1 to 6, **characterized in that** the supporting bars (4, 5) are twice as wide and exactly the same height as the diameter (D) of the vertical holes (13), and the contact bars (2, 3) are twice as wide and twice as high as the diameter (D) of the vertical holes (6).

8. Device according to Claims 4 and 7, **characterized in that**, at each bar (2 to 5), the distance between adjacent vertical holes (6, 13) and the distance between the end vertical holes and the adjacent end face of the bar (2 to 5) corresponds to half the diameter (D) of the vertical holes (6, 13).

9. Device according to one of Claims 1 to 8, **characterized in that** a lateral clamping plate (23) for bringing into contact with the workpiece (30) is assigned to each contact bar (2, 3), and this clamping plate (23) can be extended from an initial position bearing flat against the contact bar (2, 3) into a clamping position at a distance from the contact bar (2, 3).

10. Device according to Claim 9, **characterized in that** each contact bar (2, 3) is provided with a longitudinal row of horizontal holes (7), to which at least one row of correspondingly oriented vertical tapped holes (8, 9) for locking screws (19) is assigned, **in that** a central horizontal hole (7) accommodates a bolt-shaped internally threaded sleeve (27), to which a clamping screw (26) acting on the clamping plate (23) is screwed, and **in that** the clamping plate (23) is provided with two guide pins (24, 25) which slide in other horizontal holes (7) of the contact bar (2, 3).

11. Device according to Claims 4 and 10, **characterized in that** the contact bars (2, 3) have just as many horizontal holes (7) as vertical holes (6) and said horizontal holes (7) are exactly the same size as said vertical holes (6), said holes (6, 7) in each case being arranged in pairs with intersecting axes.

12. Device according to one of Claims 1 to 11, **characterized in that**, for the adjustable inclination of the workpiece (30) relative to the tool (43), one supporting bar (4) can be raised in parallel from the contact bars (2, 3) in a displaceable manner, the two pivot pins (17) assigned to the supporting bar (4) being displaced in position relative to at least one (2, 3) of the two bars (2, 4; 3, 4) which are connected to one another in an articulated manner and bridging the distance between the bars (2, 4; 3, 4), this distance being secured by means of locking screws (19) which can be screwed through tapped holes (10 to 12) of the bars (2, 3) until they bear against or engage in the pivot pins (17).

13. Device according to one of Claims 1 to 12, **characterized in that** the clamping device (34, 35) assigned to a pivot pin (18) is formed by a clamping screw (34) which can be screwed into an axial tapped hole of the pivot pin (18) and, under prestress of the two bars (2, 5; 3, 5), can be tightened with its head or via a washer (35) against the top side of the top bar (5).

14. Device according to one of Claims 1 to 13, **characterized in that** the end faces of the bars (2 to 5) have at least one longitudinally directed tapped hole (12, 15), directed through right into the adjacent vertical hole (6, 13), for a locking screw (19).

15. Device according to one of Claims 1 to 14, **characterized in that** a fixing plate (21) is assigned to at least one pivot pin (17, 18), which fixing plate (21), in a right-angled arrangement of the two bars (2 to 5) connected to one another in an articulated manner, can be brought into contact with both bars and can be firmly screwed to one bar or to both bars.

16. Device according to one of Claims 1 to 15, **characterized in that** two clamping plates (54, 55) are provided which have in each case V-shaped clamping surfaces (56, 57), can be attached to diametrically opposite pivot pins (17, 18) and then project into the parallelogram opening enclosed by the four bars (2 to 5) in order to seize a corresponding workpiece (60) from opposite sides while the two pivot pins (17, 18) approach one another.

17. Device according to Claim 16, **characterized in that** each clamping plate (54, 55) has a fastening hole (58, 59) and can be connected to the pivot pin (17, 18) by a fastening screw which can be screwed axially from below into the pivot pin (17, 18).

18. Device according to Claim 16 or 17, **characterized in that** each clamping plate (54, 55) has at least two clamping surfaces (56, 57) of different shape and size for alternative use.

19. Device according to one of Claims 1 to 18, **characterized in that** a divider pin (85) having an axial divider point (89) is provided, and this divider pin (85) can be fitted into the vertical holes (6, 13, 66) in such a way that the divider point (89) projects beyond the underside of the supporting bars (4, 5; 64, 65).

20. Device according to Claim 19, **characterized in that** the divider pin (85) is designed as an internally threaded sleeve, into which the divider point (89) projecting from a threaded shank (87) can be screwed in an extendable manner.

21. Device according to one of Claims 1 to 20, **characterized in that** at least one contact bar (63) is provided which has a constriction (79) in the centre region and thereby permits machining of the workpiece (70) in the region of the side flank (71) against which the contact bar (63) bears.

22. Device according to one of Claims 1 to 21, **characterized in that** at least one pivot pin is displaceably mounted in a vertical slot (72) of a bar (63), **in that** the vertical slot (72) comprises the vertical hole at the one bar end and runs in the shape of an arc of a circle around the axis of the vertical hole at the other bar end, and **in that** the angle between the bars (63, 64) linked to one another can be fixed by means of a releasable clamping device (73, 74).

## Revendications

1. Dispositif pour la manutention d'une machine-outil (42), en particulier d'une perceuse à main ou d'une fraiseuse, comprenant un porte-pièce qui présente deux barres d'appui supérieures parallèles (4, 5), qui est connecté à deux pièces de serrage (2, 3) associées chacune à un flanc latéral (32, 33) de la pièce à usiner (30) et qui porte deux colonnes de guidage saillant vers le haut (36, 37), sur lesquelles est guidée de manière déplaçable une pièce transversale (38) comprenant des alésages pour recevoir les colonnes ainsi qu'un logement (41) et un blocage pour la machine-outil (42), **caractérisé en ce que**
- l'on prévoit en tant que pièces de serrage deux barres d'applique parallèles (2, 3),
- les quatre barres (2 à 5) sont articulées les unes aux autres au moyen de boulons axiaux (17, 18) en formant un parallélogramme, de sorte que lorsque les barres d'appui supérieures (4, 5) reposent sur la pièce à usiner (30), les barres d'applique (2, 3) peuvent être pressées contre les flancs latéraux (32, 33) de pièces à usiner (30) de différentes largeurs,
- un dispositif de serrage desserrable (34, 35) pour la fixation de l'angle entre les barres (3, 5) articulées l'une à l'autre est associé à au moins l'un des quatre boulons axiaux (17, 18) et
- les colonnes de guidage (36, 37) font saillie vers le haut depuis une paire de barres parallèles (4, 5) et sont montées à rotation dans cette paire de barres ou dans la pièce transversale (38) qui peut pivoter parallèlement avec l'autre paire de barres (2, 3).

2. Dispositif selon la revendication 1, **caractérisé en ce que** les boulons axiaux (17, 18) sont enfoncés lâchement dans des alésages verticaux (6, 13) des barres d'appui supérieures (4, 5) et des barres d'applique (2, 3) et sont connectés à celles-ci et fixés dans leur position axiale par des vis de blocage (19) qui sont vissées transversalement à l'axe des boulons dans des alésages filetés (8 à 12, 14, 15) des barres (2 à 5), les boulons axiaux (17, 18) pouvant tourner à chaque fois par rapport à l'une (4, 5) des deux barres (2 à 5) qu'ils connectent, par le fait que la vis de blocage concernée (19) vient en prise dans une rainure annulaire (20) du boulon axial (17, 18).

3. Dispositif selon la revendication 1 ou 2, **caractérisé en ce que** les colonnes de guidage (36, 37) sont insérées lâchement dans des alésages verticaux (13) des barres (4, 5) et sont maintenues par des vis de blocage (19) qui sont vissées transversalement à l'axe des colonnes de guidage dans les barres (4, 5) et qui viennent en prise avec leur extrémité dans des alésages radiaux ou des rainures annulaires des colonnes de guidage (36, 37).

4. Dispositif selon les revendications 2 et 3, **caractérisé en ce que** les barres (2 à 5) sont réalisées sous forme de barres à trous à chaque fois avec une rangée d'alésages verticaux équidistants (6, 13) et une rangée correspondante d'alésages filetés (10, 11, 14) pour les vis de blocage (19) et **en ce que** les boulons axiaux (17, 18) et les colonnes de guidage (36, 37) présentent des diamètres égaux et les alésages verticaux (6, 13) ont également des diamètres égaux (D), de sorte que les boulons axiaux (17, 18) et également les colonnes de guidage (36, 37) puissent être enfoncés en fonction des différentes circonstances données dans d'autres alésages verticaux (6, 13) des barres (2 à 5).

5. Dispositif selon la revendication 4, **caractérisé en ce que** chaque barre (2 à 5) présente au moins cinq alésages verticaux (6, 13).

6. Dispositif selon la revendication 4 ou 5, **caractérisé en ce qu**'à chaque fois deux rangées décalées en hauteur l'une par rapport à l'autre, d'alésages filetés (10, 11) de même dimension pour les vis de blocage (19) sont associées à la rangée d'alésages verticaux des barres d'applique (2, 3).

7. Dispositif selon l'une quelconque des revendications 1 à 6, **caractérisé en ce que** les barres d'appui supérieures (4, 5) sont deux fois plus larges et exactement aussi hautes que le diamètre (D) des alésages verticaux (13) et les barres d'applique (2, 3) sont deux fois plus larges et deux fois plus hautes que le diamètre (D) des alésages verticaux (6).

8. Dispositif selon les revendications 4 et 7, **caractérisé en ce que** pour chaque barre (2 à 5), la distance entre des alésages verticaux adjacents (6, 13) ainsi que la distance entre les alésages verticaux aux extrémités et la face de bout adjacente de la barre (2 à 5) correspond à la moitié du diamètre (D) des alésages verticaux (6, 13).

9. Dispositif selon l'une quelconque des revendications 1 à 8, **caractérisé en ce qu'**une plaque de serrage latérale (23) destinée à s'appliquer contre la pièce à usiner (30) est associée à chaque barre d'applique (2, 3), cette plaque de serrage pouvant être déplacée d'une position de départ en applique à plat contre la barre d'applique (2, 3) dans une position de serrage à distance de la barre d'applique (2, 3).

10. Dispositif selon la revendication 9, **caractérisé en ce que** chaque barre d'applique (2, 3) est pourvue d'une rangée longitudinale d'alésages horizontaux (7), dont au moins une rangée est associée à des alésages filetés verticaux (8, 9) orientés de manière correspondante pour des vis de blocage (19), **en ce qu'**un alésage horizontal central (7) reçoit une douille à filetage interne (27) en forme de boulon avec laquelle une vis de serrage (26) venant en prise sur la plaque de serrage (23) est vissée, et **en ce que** la plaque de serrage (23) est pourvue de deux boulons de guidage (24, 25) qui glissent dans d'autres alésages horizontaux (7) de la barre d'applique (2, 3).

11. Dispositif selon les revendications 4 et 10, **caractérisé en ce que** les barres d'applique (2, 3) présentent autant d'alésages horizontaux (7) que d'alésages verticaux (6), tous de mêmes dimensions, qui sont disposés à chaque fois par paires avec des axes se coupant.

12. Dispositif selon l'une quelconque des revendications 1 à 11, **caractérisé en ce que**, pour l'inclinaison ajustable de la pièce à usiner (30) par rapport à l'outil (43), une barre d'appui supérieure (4) peut être soulevée des barres d'applique (2, 3) de manière déplaçable en parallèle, les deux boulons axiaux (17) associés à la barre d'appui supérieure (4) subissant un déplacement de leur position par rapport à au moins une (2, 3) des deux barres (2, 4 ; 3, 4) connectées de manière articulée l'une à l'autre et couvrant la distance entre les barres (2, 4 ; 3, 4) qui est fixée par des vis de blocage (19) qui peuvent être vissées à travers des alésages filetés (10 à 12) des barres (2, 3) jusqu'à venir en applique contre les boulons axiaux (17) ou en engagement dans ceux-ci.

13. Dispositif selon l'une quelconque des revendications 1 à 12, **caractérisé en ce que** le dispositif de serrage (34, 35) associé à un boulon axial (18) est formé par une vis de serrage (34) qui peut être vissée dans un alésage fileté axial du boulon axial (18) et qui peut être vissée par serrage des deux barres (2, 5 ; 3, 5) avec sa tête ou par le biais d'une rondelle (35) contre la face supérieure de la barre supérieure (5).

14. Dispositif selon l'une quelconque des revendications 1 à 13, **caractérisé en ce que** les faces de bout des barres (2 à 5) présentent au moins un alésage fileté (12, 15) longitudinal pour une vis de blocage (19), allant jusque dans l'alésage vertical voisin (6, 13).

15. Dispositif selon l'une quelconque des revendications 1 à 14, **caractérisé en ce qu'**une plaque de fixation (21) est associée à au moins un boulon axial (17, 18), laquelle peut être appliquée contre les deux barres lors d'un agencement à angle droit des deux barres (2 à 5) connectées de manière articulée et peut être vissée fermement avec une barre ou avec les deux barres.

16. Dispositif selon l'une quelconque des revendications 1 à 15, **caractérisé en ce qu'**il est prévu deux plaques de serrage (54, 55) présentant à chaque fois des surfaces de serrage en forme de V (56, 57), lesquelles peuvent être fixées à des boulons axiaux diamétralement opposés (17, 18) et pénètrent ensuite dans l'ouverture en forme de parallélogramme décrite par les quatre barres (2 à 5), afin de saisir par des côtés opposés une pièce à usiner correspondante (60) en rapprochant mutuellement les deux boulons axiaux (17, 18).

17. Dispositif selon la revendication 16, **caractérisé en ce que** chaque plaque de serrage (54, 55) présente un alésage de fixation (58, 59) et peut être connectée au boulon axial (17, 18) avec une vis de fixation pouvant être vissée par le dessous axialement dans le boulon axial (17, 18).

18. Dispositif selon la revendication 16 ou 17, **caractérisé en ce que** chaque plaque de serrage (54, 55) présente au moins deux surfaces de serrage (56, 57) de forme et de taille différentes pour une utilisation sélective.

19. Dispositif selon l'une quelconque des revendications 1 à 18, **caractérisé en ce qu'**il est prévu un boulon compas (85) avec une pointe de compas axiale (89), qui peut être inséré dans l'un des alésages verticaux (6, 13, 66) de telle sorte que la pointe de compas (89) dépasse de la face inférieure des barres d'appui supérieures (4, 5 ; 64, 65).

20. Dispositif selon la revendication 19, **caractérisé en ce que** le boulon compas (85) est réalisé en tant que douille à filetage interne dans laquelle la pointe de compas (89) dépassant d'une tige filetée (87) est vissée de manière à ressortir.

21. Dispositif selon l'une quelconque des revendications 1 à 20, **caractérisé en ce qu'**il est prévu au moins une barre d'applique (63) qui présente dans sa partie centrale un rétrécissement (79) et permet de ce fait un usinage de la pièce à usiner (70) dans la région des flancs latéraux (71) au niveau desquels la barre d'applique (63) s'applique.

22. Dispositif selon l'une quelconque des revendications 1 à 21, **caractérisé en ce qu'**au moins un boulon axial est monté de manière déplaçable dans une fente verticale (72) d'une barre (63), **en ce que** la fente verticale (72) comprend l'alésage vertical à une extrémité de la barre et s'étend sous forme d'arc de cercle autour de l'axe de l'alésage vertical à l'autre extrémité de la barre et **en ce que** l'angle entre les barres articulées l'une à l'autre (63, 64) peut être fixé au moyen d'un dispositif de serrage desserrable (73, 74).
